# EUROPÄISCHE PATENTSCHRIFT

(11) **EP 0 528 262 B1**
(45) Veröffentlichungstag und Bekanntmachung des Hinweises auf die Patenterteilung: **19.04.1995**
(21) Anmeldenummer: 92113303.9
(22) Anmeldetag: 05.08.1992
(51) Int. Cl.: B23B 31/26, B23B 29/04

(54) **Mechanische Spannvorrichtung**
Mechanical clamping device
Dispositif mécanique de serrage

(30) Priorität: 21.08.1991 DE 4127661; 23.07.1992 DE 4224296
(43) Veröffentlichungstag der Anmeldung: 24.02.1993
(73) Patentinhaber: SANDVIK AKTIEBOLAG, 811 81 Sandviken (SE)
(72) Erfinder: Enbergs, Bernhard, W-4270 Dorsten (DE)
(74) Vertreter: Weber, Dieter, Dr.

(56) Entgegenhaltungen:
- EP-A- 0 275 911
- DE-A- 3 813 670

## Beschreibung

Die vorliegende Erfindung betrifft eine mechanische Spannvorrichtung für den Schaft eines Werkzeuges oder Werkzeughalters, mit einem hohlen Schaftaufnahmeteil, in welchem ein Zugelement angeordnet ist, wobei ein oder mehrere Stifte, die in ihrer Längsrichtung bewegbar sind, an dem Zugelement angreifen, Bohrungen für die Stifte in dem Schaflaufnahmeteil vorgesehen sind, welche sich von dem hohlen Inneren desselben nach außen erstrecken, und die Angriffsfläche an dem Zugelement und/oder den Stiften oder deren Bewegungsrichtung so ausgelegt sind, daß die Stifte bei ihrer Bewegung eine Kraft in axialer Richtung auf den Schaft ausüben.

Bei einer bekannten Vorrichtung dieser Art ist zentral in dem Aufnahmeteil eine Zugstange angeordnet, deren Endabschnitt konisch erweitert ist, wobei Stifte mit einem Ende an dieser konischen Fläche anliegen. Das andere Ende der Stifte ragt durch das als zylindrischer Zapfen ausgebildete Aufnahmeteil hindurch und greift von der Innenseite her an einer konischen Fläche eines mit dem Werkzeug verbundenen Hohlschaftes an. Beim Spannen treibt der konische Endabschnitt des Zugelementes die Stifte in radialer Richtung mit einer kleinen Axialkomponente nach außen, die ihrerseits an der konischen Innenfläche des Hohlschaftes angreifen und diesen in axialer Richtung über den Spannzapfen an einen Anschlag ziehen.

Bei dieser Spannvorrichtung wird es als nachteilig angesehen, daß man von dem dem Werkzeug abgewandten Teil der Schaftaufnahme direkt oder indirekt Zugang zu dem Zugelement haben muß, um dieses in axialer Richtung bewegen zu können. Dies erfordert eine zentrale Durchgangsbohrung in dem Schaftaufnahmeteil und die Hindurchführung entsprechender Kraftübertragungselemente. Dabei muß dafür Sorge getragen werden, daß das Zugelement z. B. auch im Falle einer rotierenden Spindel ständig unter Spannung bleibt. Der als Hohlzapfen ausgebildete Schaft wird von den Stiften mit relativ starken radialen Kraftkomponenten auseinandergedrückt, was den genauen Sitz des Schaftes am Schaftaufnahmeteil beeinträchtigen kann.

Es sind auch andere Spannvorrichtungen bekannt, bei weichen das Schaftaufnahmeteil so als Hohlteil ausgebildet ist, daß es neben dem Zugelement auch noch den Schaft eines Werkzeugs oder Werkzeugträgers in seinem Inneren aufnehmen kann. Hierdurch werden die angesprochenen Passungsprobleme, die bei der Spreizung eines hohlen Schaftes auftreten können, kompensiert, weil der Schaft mit seiner im allgemeinen konischen Außenfläche an der Innenfläche des Schaftaufnahmeteils anliegt, welches von innen auf den Schaft wirkende Kräfte auffängt, wobei die im allgemeinen konischen Anlageflächen (z.B. bei Steilkegelschäften) für einen genauen Sitz sorgen.

Gleichwohl erfordern auch diese weiteren bekannten Spannvorrichtungen einen Zugang von der hinteren Seite des Schaftaufnahmeteils, um das Zugelement betätigen zu können.

Darüberhinaus sind z.B. von einfachen Bohrmaschinen Spannfutter bekannt, bei weichen drei oder mehr kreisförmig angeordnete und nach außen vorgespannte Klemmelemente durch eine Überwurfmutter zusammengepreßt werden und so einen Bohrerschaft oder dergleichen halten. Diese Art Spannvorrichtungen sind jedoch relativ ungenau, da sie keinen axialen Zug auf den zu spannenden Schaft ausüben und der zu spannende Schaft ebenso wie die entsprechende Schaftaufnahme keine präzise definierten Flächen haben, die durch Anlage aneinander den exakt reproduzierbaren Sitz des Schaftes bzw. Werkzeuges definieren.

Aus der EP-A-0 275 911 ist eine Spannvorrichtung für den Schaft eines Werkzeuges bekannt, mit einem hohlen Schaftaufnahmeteil in welchem ein Zugelement angeordnet ist. Dabei ist das Schaftaufnahmeteil als Hohlteil derart ausgebildet, daß ein durch das Zugelement einzuziehender passender Schaft darin aufnehmbar ist. Weiterhin sind Bohrungen für Stellschrauben vorgesehen, welche sich durch die hohle Wand des Schaftaufnahmeteils erstrecken und mit einer Kegelmantelfläche des Schaftaufnahmeteils in Eingriff treten können, um dieses in axialer Richtung zu spannen. Nachteilig ist dabei der mitunter schwierige Zugang zu den Stellschrauben und die Tatsache, daß bei mehreren Stellschrauben diese im allgemeinen nur nacheinander und nicht gleichzeitig betätigt werden können, was zu einer einseitigen Kraftausübung auf den Schaft und zu einer möglichen Verkantung desselben führt.

Gegenüber diesem Stand der Technik liegt der vorliegenden Erfindung die Aufgabe zugrunde, die eingangs genannte mechanische Spannvorrichtung dahingehend weiterzubilden, daß der Zugang zu einem Spannelement erleichtert und dadurch die Betätigung der Vorrichtung leichter automatisierbar ist und bei Verwendung mehrerer Stifte eine gleichzeitige Zugausübung auf den Spannschaft ohne nennenswerte Querkräfte ermöglicht wird.

Bezüglich des eingangs genannten Standes der Technik wird diese Aufgabe dadurch gelöst, daß das Schaftaufnahmeteil so als Hohlteil ausgebildet ist, daß In ihm ein durch das Zugelement einzuziehender, passender Schaft aufnehmbar ist, daß das Schaftaufnahmeteil weiterhin mit einem Außengewinde versehen ist und eine passende Überwurfmutter aufweist, und daß die Überwurfmutter eine umlaufende Stützfläche für die Stifte aufweist, wobei die Stützfläche so ausgerichtet ist, daß sie beim Anziehen der Überwurfmutter in Spannrichtung die Stifte durch die Bohrungen in das Innere des Schaftaufnahmeteils und gegen die Angriffsflächen des Zugelementes drückt.

Mit dieser Ausgestaltung gelingt es, sämtliche oben geschilderten Nachteile der aus dem Stand der Technik bekannten Spannvorrichtungen zu vermeiden. Durch die Verwendung einer Überwurfmutter und die Kraftübertragung über Durchgangsbohrungen des Schaftaufnahmeteils von der Überwurfmutter auf das Zugelement mit Hilfe von Stiften ist der Zugang zum Schaftaufnahmeteil nur noch von der Vorderseite erforderlich. Insbesondere ist auf der Rückseite des Schaftaufnahmeteils keine Mechanik mehr erforderlich, welche das Zugelement spannt.

Bohrungen sind allenfalls noch für eine Kühlmittelzufuhr erforderlich. Mit Vorteil wird der direkte Eingriff der Stifte an dem hohen Schaft des Werkzeuges oder Werkzeughalters vermieden, so daß dessen Paßgenaulgkeit durch lokale Verformungen nicht beeinträchtigt werden kann. Die Stifte treten lediglich mit dem Zugelement in unmittelbaren Kontakt, weiches seinerseits Eingriffselemente für den Eingriff mit dem Schaft hat, um diesen in axialer Richtung in die Schaftaufnahme hineinzuziehen und festzuspannen.

Dabei bleibt weiterhin die hohe Paßgenauigkeit erhalten, die man mit dem Einziehen des Schaftes mit entsprechendenPaßflächen in ein hohles Schaftaufnahmeteil mit Hilfe eines Zugelementes erzielt.

Der Einfachheit halber wird im folgenden lediglich von einem Schaft allgemein oder von einem Werkzeugschaft gesprochen, wobei es sich versteht, daß dieser Schaft nicht unmittelbar mit einem Werkzeug verbunden sein muß, sondern an einem Werkzeughalter ausgebildet sein kann, der seinerseits erst ein Werkzeug trägt, wobei weitere Halte- und Justierelemente zwischengeschaltet sein können.

Bei der Spannvorrichtung gemäß der vorliegenden Erfindung hat es sich als zweckmäßig erwiesen, wenn die Bohrungen für die Sorte in einer Ebene liegen, welche die Achse der Spannvorrichtung enthält und wenn die Bohrungen dabei unter einem Winkel von weniger als 45° gegenüber der Achse der Spannvorrichtung geneigt sind. Einerseits müssen zwar die Bohrungen von dem inneren Hohlraum des Schaftaufnahmeteils zur Außenseite verlaufen, weil sich dort das Außengewinde mit der Überwurfmutter befindet, welche ihrerseits die Stifte in die Bohrungen hineindrücken soll, so daß sich radiale Komponenten der Bohrungen nur schwer vermeiden lassen, will man nicht das Schaftaufnahmeteil sehr ausladend und mit einer tiefen Hinterschneidung im Inneren gestalten. Andererseits ist ein möglichst kleiner Winkel zwischen den Bohrungen und der Achse der Spannvorrichtung bevorzugt, weil auf diese Weise weniger Kraft zur Überwindung von Reibung erforderlich ist und die über die Gewindesteigung der Überwurfmutter übersetzte Spannkraft in optimaler Weise auf das Zugelement übertragen werden kann.

Bevorzugt ist deshalb ein Winkel von etwa 30° zwischen Achse der Spannvorrichtung und Bohrung für die Stifte.

Weiterhin sollte sich in der bevorzugten Ausführungsform der Erfindung das Außengewinde mindestens bis auf einen Abstand zum vorderen Ende des Schaftaufnahmeteiles erstrecken, der kleiner ist als die axiale Gewindelänge der Überwurfmutter und der vorzugsweise Null ist, so daß sich also das Gewinde für die Überwurfmutter im wesentlichen bis zum vorderen Ende des Schaftaufnahmeteils erstreckt. Auf diese Weise kann man beim Lösen der Überwurfmutter erreichen, daß deren zum Werkzeug hin gewandter, vorderer Rand mit dem Schaft oder dem Werkzeughalter in Eingriff tritt und den Schaft aus dem Schaftaufnahmeteil löst.

Dazu ist es selbstverständlich zweckmäßig, wenn der Außendurchmesser des Schaftaufnahmeteils an seinem vorderen Ende kleiner ist als der Durchmesser einer Anlagefläche am Schaft, die sich senkrecht zur Achse der Spannvorrichtung erstreckt.

Die Stützfläche für die Stifte an der Überwurfmutter ist zweckmäßigerweise eine konische Fläche an der Überwurfmutter außerhalb des Gewindeabschnittes, deren Winkel gegenüber einer zur Achse der Spannvorrichtung senkrechten Ebene der gleiche ist, wie der Winkel der Bohrungen bzw. Stifte zur Achse der Spannvorrichtung. Damit schneidet die konische Fläche die Achsen der Bohrungen genau unter einem rechten Winkel, die Stifte können auf diese Weise mit ihrer gesamten Querschnittsfläche auf der Stützfläche aufliegen.

Bevorzugt ist dabei eine Ausführungsform der Erfindung, bei welcher die erwähnte Stützfläche von einer Seitenwand einer in der Innenfläche der Überwurfmutter umlaufenden, V-förmigen Nut gebildet wird, wobei der Winkel zwischen den beiden V-Flächen etwa 90° beträgt.

Die Ausbildung einer solchen V-förmigen Nut bietet eine Sicherungsmöglichkeit gegen das vollständige Lösen der Überwurfmutter, wie später noch beschrieben wird.

Das Zugelement ist ein im Längsschnitt T-förmiges Teil, dessen Steg in an sich bekannter Weise von einem im wesentlichen zylindrischen Teil gebildet wird, an weichem Spreizfinger anliegen, wobei das Flanschteil dieses im Längsschnitt T-förmigen Zugelementes in Richtung der Stifte offene Aussparungen aufweist, deren Grund eine Angriffsfläche für die Stifte bietet. Mit Vorteil erreicht man so durch die in den Aussparungen aufgenommenen Stifte, daß ein Verdrehen des Zugelementes nicht möglich ist, was man zum Sichern desselben in dem Schaftaufnahmeteil ausnutzen kann.

Zwischen den Aussparungen, welche die Stifte aufnehmen, sind in der bevorzugten Ausführungsform der Erfindung zusätzliche zweite Aussparungen in dem Flanschteil des Zugelementes vorgesehen, die in axialer Richtung offen sind und je eine Feder aufnehmen, welche sich mit einem Ende am Grund dieser zweiten Aussparungen und mit dem anderen Ende an einem die Spreizfinger haltenden Haltering abstützt, der seinerseits auf einem mindestens teilweise nach innen ragenden Bund an der Innenwand des Schaftaufnahmeteils aufliegt.

Ein solcher Haltering hat im wesentlichen die Funktion, mehrere um den Umfang des zylindrischen Stegteiles des Zugelementes angeordnete Spreizfinger an Ort und Stelle zu halten, die durch eine konische Erweiterung am unteren Ende des Stegteiles bei einer entsprechenden axialen Bewegung des Zugelementes in radialer Richtung nach außen gedrückt werden und in entsprechende Nuten des (hohlen) Werkzeugschaftes eingreifen, um diesen mitzunehmen. Hierzu ist eine gewisse Relativbewegung zwischen den Spreizfingern und dem Zugelement erforderlich, damit jene durch die konische Erweiterung auseinandergedrückt und mit der Nut im Schaftteil in Eingriff gebracht werden können. Die erwähnten Federn spannen den Haltering und damit die Spreizfinger in Richtung auf die konische Erweiterung vor, wobei jedoch der Haltering gleichzeitig auf einem Bund aufliegt, so daß die Spreizfinger nicht von der konischen Erweiterung auseinandergedrückt werden, wenn das Zugelement in seiner zurückgezogenen Lösestellung ist.

Darüberhinaus ist in der bevorzugten Ausführungsform der Erfindung auch eine Feder zwischen dem Schaftaufnahmeteil und dem Zugelement vorgesehen, welche das Zugelement in Löserichtung vorspannt. Das Zugelement wird durch diese Feder in Richtung der Öffnung des Schaftaufnahmeteils gedrückt, wobei gleichzeitig auch die Stifte durch die Bohrungen nach außen gedrückt werden, soweit die Stützfläche der Überwurfmutter dies zuläßt. Dies bringt gleichzeitig eine Sicherung der Überwurfmutter mit sich, da beim Lösen der Überwurfmutter die zur Stützfläche rechtwinklig verlaufende Wand der V-förmigen Nut der Überwurfmutter auf die Seitenflächen der Stifte zu liegen kommt und sich bei den herausgedrückten Stiften nicht weiter lösen läßt. Zur Montage und Demontage wird da Zugelement gegen die Kraft der erwähnten Feder soweit in das Schaftaufnahmeteil hineingedrückt, daß auch die Stifte in ihren Bohrungen in das Innere des Schaftaufnahmeteils gleiten.

Die erfindungsgemäße Spannvorrichtung läßt sich mit großem Vorteil nicht nur an stehenden, sondern vor allem auch an rotierenden Maschinenteilen bzw. Spindeln montieren.

Das Schaftaufnahmeteil bzw. dessen den Schaft aufnehmender Hohlraum hat zweckmäßigerweise einen polygonalen Querschnitt, Dabei ist eine Ausführungsform bevorzugt, bei welcher die Ecken des polygonalen Querschnittes abgerundet und die dazwischenliegenden Seiten leicht konvex gekrümmt sind, so daß Seiten- und Eckbereiche glatt und ohne Ecken ineinanderübergehen. Insbesondere wird ein solcher Querschnitt für den Schaft und das Schaftaufnahmeteil bevorzugt, bei welchem die Grundform eine gleichseitiges Dreieck ist, welches entsprechende Abrundungen aufweist. Dabei ist außerdem vorgesehen, daß Schaft- und Schaftaufnahmeteil sich in axialer Richtung allmählich verjüngen, wobei das Schaftaufnähmeteil, nachdem der innere Querschnitt ein vorgegebenes Minimum erreicht hat, eine zylindrische Hinterschneidung aufweist, deren Durchmesservorzugsweise mit dem Maximaldurchmesser des polygonalen Abschnittes an dessen erster Stelle entspricht. Die Hinterschneidung ist also im wesentlichen entlang, der nur leicht konvex gekrümmten Seitenkanten des polygonalen Querschnittes vorhanden, während sie in den Eckbereichen bis auf Null zurückgeht. Die Verjüngung in axialer Richtung und der polygonale Querschnitt sind dabei voneinander unabhängige Merkmale.

Bei einer solchen Ausgestaltung des Schaftaufnahmeteils hat es sich als vorteilhaft erwiesen, wenn das Flanschteil den gleichen polygonalen Querschnitt und einen maximalen Außendurchmesser hat, wie er der Engstelle des Schaftaufnahmeteils entspricht. In diesem Fall kann nämlich das Flanschteil in der richtigen polygonalen Orientierung über die Engstelle in den hinterschnlttenen Bereich eingeschoben und durch eine Drehung um den halben Polygonwinkel in diesem Bereich gesichert werden, da es dann mit seinen Eckbereichen Ober den hinterschnittenen Seitenbereich des darunterliegenden Polygonquerschnittes angeordnet ist. Als Polygonwinkel wird dabei der Winkel bezeichnet, der zwischen den Verbindungslinien benachbarter Polygonecken mit dem Zentrum liegt.

In dieser verdrehten Stellung des Flanschteils des Zugelementes fluchten gemäß der bevorzugten Ausführungsform der Erfindung die Bohrungen für die Stifte und die Aussparungen zur Aufnahme der Stifte in dem Flanschteil miteinander.

Das Flanschteil wird damit durch die Stifte gegen Verdrehen gesichert und ist damit unverlierbar in der Hinterschneidung aufgenommen. Der zusätzlich darunter angeordnete Haltering für die Spreizfinger sollte aus einem elastischen Material bestehen und das zylindrische Außenmaß der Hinterschneidung haben. Wegen seiner Elastizität kann dieser Haltering über die Engstelle des polygonalen Querschnittes hinweg bis in die Hinterschneidung geschoben werden und dehnt sich danach wieder auf seinen vollen Durchmesser aus, so daß er auf dem durch die Hinterschneidung gebildeten Bund im Bereich der Seiten des polygonalen Querschnittes aufliegt.

Die Überwurfmutter kann entweder von Hand oder mit Hilfe von Werkzeugen festgespannt und gelöst werden, bevorzugt wird jedoch eine Ausführungsform der Erfindung, bei welcher die Überwurfmutter an ihrer Außenseite für den Eingriff mit einem mechanischen Antriebselement ausgebildet ist, wie es beispielsweise in der gleichzeitig für dieselbe Anmelderin eingereichten Anmeldung mit dem Titel "Greifereinrichtung für automatischen Werkzeugwechsel" beschrieben ist, deren Inhalt hier durch die Bezugnahme in die vorliegende Anmeldung aufgenommen ist, Vorzugsweise besteht diese Ausbildung in einer Außenverzahnung an der Überwurfmutter. Ein mechanisches Antriebselement ist dann beispielsweise ein Ritzel, welches relativ zu der Überwurfmutter axial und/oder radial verschiebbar und dadurch in und außer Eingriff mit der Verzahnung der Überwurfmutter bringbar ist, wobei die Drehachse des Ritzels vorzugsweise parallel zur Achse der Spannvorrichtung liegt. Bei einer solchen Ausgestaltung kann das mechanische Antriebselement so relativ zu einem Greiferelement für den Schaft angeordnet und drehbar gelagert sein, daß der gleichzeitige Eingriff des mechanischen Antriebselementes an der Überwurfmutter und des Greiferelementes an den dafür vorgesehenen Schaftbereichen möglich ist.

In Werkzeugmaschinen finden vielfach automatische Werkzeugwechsel statt, wobei eine Greifereinrichtung den Schaft eines Werkzeugs oder Werkzeughalters üblicherweise in einem Bereich seitlich erfaßt, der auch im eingespannten Zustand des Schaftes außerhalb der Spannvorrichtung bleibt. Diese Greifereinrichtung führt den Schaft in der richtigen Orientierung in das Schaftaufnahmeteil ein, wobei dann üblicherweise eine zusätzliche Befestigungsvorrichtung in Eingriff gebrachtwird, die die Spannvorrichtung betätigt und den eingeführten Schaft festspannt, woraufhin die Greifereinrichtung gelöst wird. Erfindungsgemäß bilden Greiferelement und Ritzel eine Einheit, die gleichzeitig miteinander bewegt und auch gleichzeitig in Eingriff gebracht werden kann, wobei die Greiferelemente der Greifereinrichtung den Schaft halten und das Ritzel die Überwurfmutter betätigt. Dies gilt sowohl für den Lösevorgang als auch für den Spannvorgang. Besonders vorteilhaft ist dabei, daß die Haltekraft zum Gegenhalten gegen die Drehung der Überwurfmutter von den Greiferelementen über den Werkzeugschaft aufgebracht wird und daß nicht eine Maschinenspindel oder dergleichen gegen Verdrehen gesichert werden muß, wenn das Ritzel an der Überwurfmutter angreift

Eine besondere Ausführungsform betrifft die Anpassung der Spannvorrichtung derart, daß ihr Einsatz unmittelbar an bereits vorhandenen, ansonsten stanndardmäßig ausgerüsteten Maschinen möglich ist. Dies gelingt dadurch, auf der dem Werkzeug abgewandten Seite der erfindungsgemäßen Spannvorrichtung ein Verbindungselement für die Verbindung mit einer Standardschnittstelle einer Werkzeugmaschine vorgesehen ist. Die Spannvorrichtung weist danach also ein Adapterteil als Übergangselement zu herkömmlichen Maschinen auf.

In der bevorzugten Ausführungsform hat die erwähnte Schnittstelle die Form eines Flansches mit einem Zentrierteil. Das Zentrierteil kann gemäß unterschiedlichen Ausführungsformen der Erfindung ein sogenanntes Innenzentrierteil sein, d. h. ein Zapfen, der in eine Zentrieröffnung der entsprechenden Halterung einer Werkzeugmaschine eingreift, es kann jedoch auch in Form eines umlaufenden Bundes oder einzelner Vorsprünge vorliegen, die einen Zentrierstutzen oder dergleichen mit einer passenden Zentrierfläche an einer Werkzeugmaschine von außen umgreifen. Ebenso sind auch an andere übliche Halterungen von Werkzeugmaschinen anflanschbare, aufsteck- oder einsteckbare Adapterenden vorgesehen, die passsend ineinandergreifen und eine Zentrierung des an der Spannvorrichtung befestigten Werkzeuges bezüglich der Werkzeugmaschine bewirken. Bevorzugt ist dabei die Innenzentrierung mit einem Zapfen oder Stutzen, der sich von einem Flansch aus erstreckt, der z. B. an einen Spindelkopf gemäß DIN 2079 anflanschbar ist oder eine entsprechende Außenzentrierung an einer solchen Steilkegelaufnahme hat. Daneben gibt es auch Zylinderschaftwerkzeughalter, die eine Verzahnung aufweisen, z. B. gemäß VDI-Richtlinien 3425 oder entsprechende VDMA-Schnittstellen.

Die mechanische Spannvorrichtung gemäß der vorliegenden Erfindung kann auf ihrer dem Werkzeug abgewandten Seite ohne weiteres mit jeweils einem passenden Verbindungselement bzw. Adapterteil ausgerüstet werden, so daß sich diese Spannvorrichtung in vorteilhafter Weise auch an bereits vorhandene Werkzeugmaschinen mit stehenden oder rotierenden Aufnahmeelementen für einen Werkzeughalter einsetzen läßt.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Fig. 1: eine Seitenansicht der erfindungsgemäßen Spannvorrichtung, teilweise im Schnitt,
- Fig. 2: einen Axialschnitt durch eine weitere Ausführungsform,
- Fig. 3: eine Draufsicht auf die Öffnungsseite des Schaftaufnahmeteils und
- Fig. 4: nochmals eine Seitenansicht, teilweise im Schnitt, zusammen mit einem Schaft, einer Greifereinrichtung und einem mechanischen Antriebselement.
- Fig. 5: einen Längsschnitt durch die erfindungsgemäße Spannvorrichtung gemäß einer weiteren Ausführungsform mit Adapterteil,
- Fig. 6: einen Längsschnitt durch eine weitere Ausführungsform mit Adapterteil,
- Fig. 7: eine perspektivische Ansicht einer Spannvorrichtung ohne Überwurfmutter.

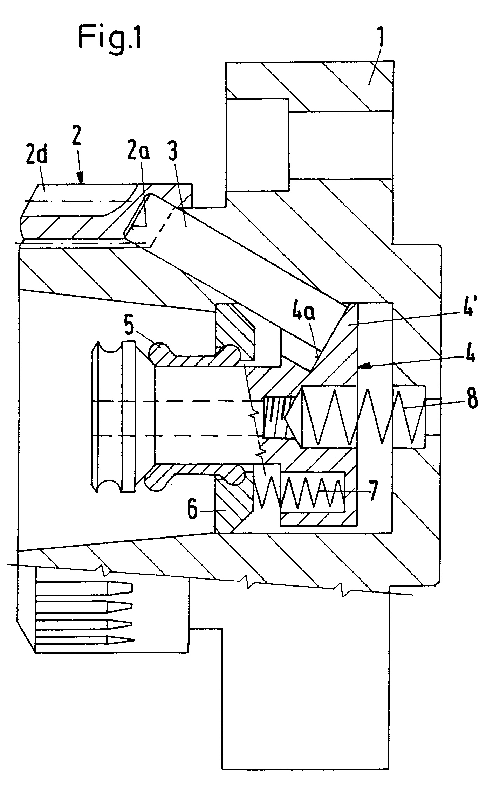

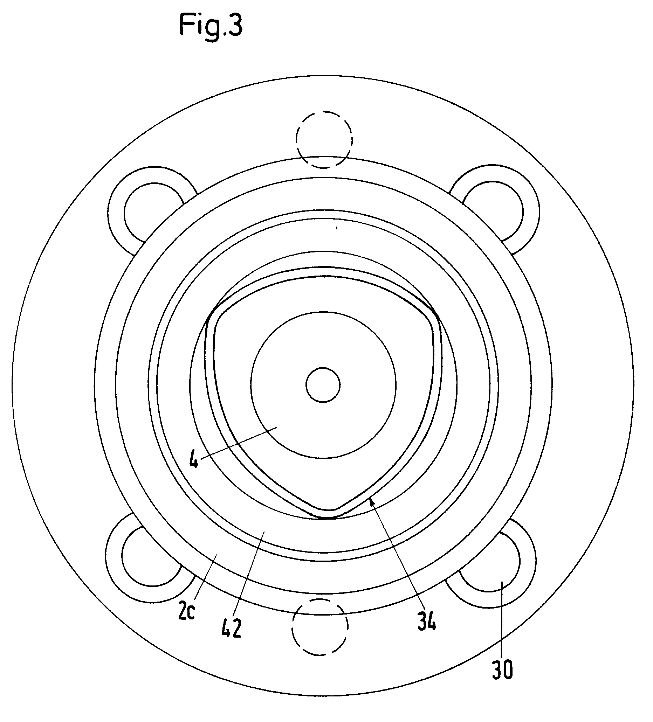

In Figur 1 erkennt man ein Schaftaufnahmeteil 1, welches mit Hilfe der Bohrung 30 oder der Gewindebohrung 31 an einem stehenden oder rotierenden Maschinenteil befestigt sein kann. Das Schaftteil 1, welches in Figur 1 in einem axialen Längsschnitt dargestellt ist, besteht aus einem in etwa hohlzylindrischen Teil, welches an einer Stirnseite offen und an der anderen im wesentlichen bis auf eine Kühlmittelbohrung 32 geschlossen ist und in der Nähe des geschlossenen Endes einen umlaufenden Flanschrand für die Aufnahme der Bohrungen 30,31 zum Zwecke der Befestigung aufweist Die axiale Schnittebene ist in Figur 1 so gelegt, daß der Schnitt durch die Achse einer Bohrung 10 verläuft, welche sich unter einem Winkel von ca. 30° zur Achse 17 der Spannvorrichtung von der Außenseite des in etwa zylindrischen Teils der Spannvorrichtung in dessen hohes Inneres erstreckt und zwar in eine im Querschnitt zylindrische Hinterschneidung 33. Der vordere, sich von der Öffnung aus in das Innere allmählich verjüngende Hohlraum 34, der letztlich den Werkzeugschaft aufnimmt, hat keinen zylindrischen, sondern einen mehr oder weniger polygonalen Querschnitt, wobei jedoch - anschaulich gesprochen - die Ecken des polygonalen Querschnitts abgerundet und die Seitenflächen "ausgebeult" sind, so daß sich insgesamt zwar noch die polygonale Grundform erkennen läßt, jedoch keinerlei scharfe Kanten oder Ecken entlang des Umfanges auftreten. Das zugrundeliegende Polygon ist ein gleichseitiges Dreieck, wobei man in der Draufsicht gemäß Figur 3 deutlich den Querschnitt des Hohlraums 34 erkennen kann, der trotz der Abrundungen immer noch beträchtlich von einem zylindrischen Querschnitt abweicht, was insbesondere auch die Übertragung Von Drehmomenten von der Spannvorrichtung auf den Werkzeugschaft und umgekehrt erleichtert.

In den Hohlräumen 33,34 erstreckt sich ein Zugelement 4, dessen Form man in der Seitenansicht bzw. im axialen Längsschnitt grob als doppel-T-förmig oder, wenn man die konische Erweiterung 35 außer Acht läßt, als T-förmig charakterisieren kann mit einem Flanschteil 4' und einem Steg 4'' zur Übertragung der Zugkraft, Das Flanschteil 4' hat den gleichen polygonalen Querschnitt und insbesondere die gleichen Abmessungen wie die polygonale Schaftaufnahme 34 an ihrer engsten Stelle.

Das Zugelement 4 kann also in der richtigen Orientierung des polygonalen Flanschteiles 4' von der Öffnungsseite her in die Schaftaufnahme 34 eingeführt und mit seinem Flanschteil 4' bis in den Bereich der Hinterschneidung 33 geschoben werden. In dieser Position wird es um 60° gedreht, was dem halben Polygonwinkel von 120° (gleich Winkel zwischen den Verbindungslinien je zweier benachbarter Ecken des Polygons mit dem Zentrum) entspricht. Der Radius der zylindrischen Hinterschneidung 33 entspricht gerade dem maximalen Radius des Polygonquerschnitts im Raum 34 an dessen engster Stelle. Dies führt dazu, daß im Bereich des maximalen Radius des Polygonquerschnitts, d.h. in den "Ecken" des Polygons, der Raum 34 ohne Stufe oder Absatz in den Raum 33 übergeht. In den dazwischenliegenden Bereichen, den "Seitenkanten" oder "Seitenflächen" des polygonalen Querschnitts tritt jedoch beim Übergang vom Raum 34 in den Raum 33 eine stufenförmige Erweiterung auf, wobei diese Stufe eine Anlagefläche für einen Haltering 6 für Spreizfinger 5 bietet. Auch ohne den Haltering 6 ist jedoch das Zugelement 4 bereits unverlierbar in den Hohlräumen 33, 34 aufgenommen, wenn es in seiner um 60° gegenüber dem Polygon zu im Raum 34 verdrehten Stellung gehalten wird.

Das Flanschteil 4' weist in Winkelabständen von 120° um seinen Umfang verteilt insgesamt drei Aussparungen 36 auf, deren Grund 4a jeweils eine Angriffsfläche für die Stirnfläche eines Stiftes 3 bietet. In der Mitte zwischen den Aussparungen 18 sind drei weitere Aussparungen 19 vorgesehen, welche eine Feder 7 aufnehmen, die den Haltering 6 gegen den Bund 38 vorspannt. Der Haltering 6 hat denselben zylindrischen Querschnitt wie der Raum 33 und besteht aus einem weichelastischen Material, so daß er durch die am Übergang vom Raum 34 zum Raum 33 gebildete Engstelle unter Verformung hindurchgeschoben werden kann und anschließend seinen Platz auf dem Bund 38 einnimmt.

Durch die drei gleichmäßig über den Umfang verteilten Bohrungen 10 erstrecken sich drei Stifte 3, deren eine Stirnfläche, wie bereits erwähnt, an der Fläche 4a in der Aussparung 36 angreift, während die andere Stirnseite an einer konischen Fläche 2a anliegt, die auf der Innenseite einer Überwurfmutter 2 ausgebildet ist. Die Stifte haben einen Durchmesser von vorzugsweise mehr als 5mm, zum Beispiel 7mm. Die konische Fläche 2a erhält man z.B. durch Einfräsen bzw. Ausdrehen einer V-förmigen Nut an der Innenfläche der Mutter 2. Im Schnitt schließen die Seitenflächen der V-förmigen Nut einen Winkel von 90° miteinander ein, wobei die eine Fläche parallel zur Achse der Stifte 3 und der Bohrungen 10 ausgerichtet ist, während die andere Fläche 2a, wie bereits erwähnt, als Stützfläche genau senkrecht zur Achse der Stifte 3 liegt, so daß diese mit ihrer Stirnfläche relativ großflächig auf der Stützfläche 2a aufliegen. Die Schraubenmutter 2 ist auf ein Außengewinde 11 aufgeschraubt, welches am vorderen Ende des Schaftaufnahmeteils 1 ausgebildet ist.

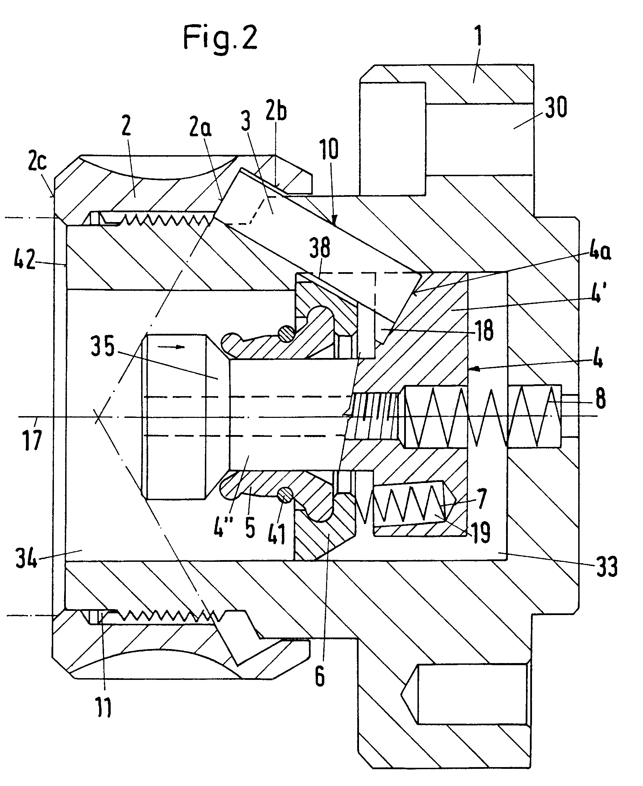

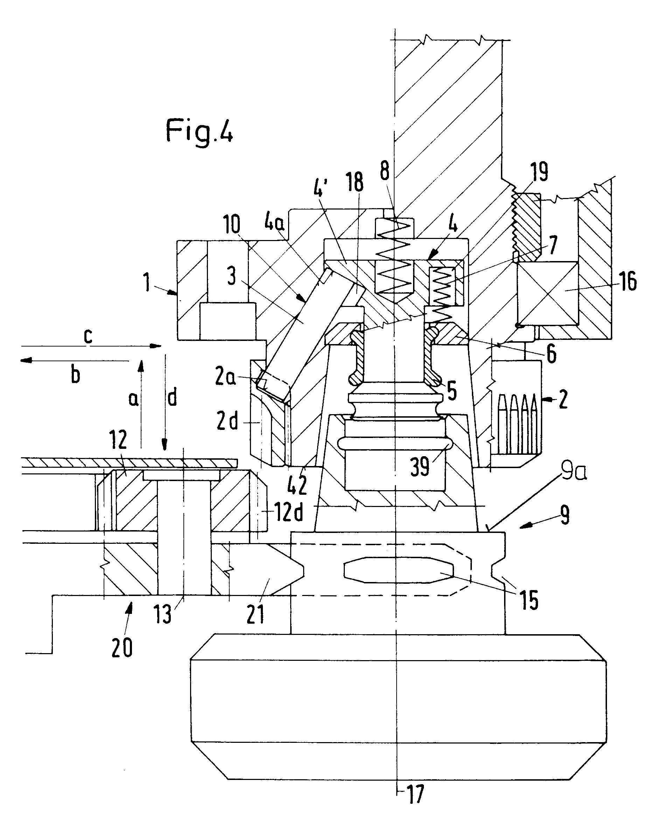

Ausgehend von der in Figur 1 und 2 dargestellten Stellung kann man sich nun leicht vorstellen, daß beim Anziehen der Überwurfmutter 2 diese in axialer Richtung zum geschlossenen Ende des Schaftaufnahmeteils 1 hin bewegt wird, wobei die Stifte 3 in ihren Bohrungen 10 weiter nach innen gedrückt werden und damit auch eine axiale Schubkraft auf das Flanschteil 4' des Zugelementes 4 übertragen. Das Zugelement bewegt sich also seinerseits in axialer Richtung weiter in das Schaftaufnahmeteil 1 hinein. Weil die Federn 7 den Haltering 6 von dem Flanschteil 4' des Zugelementes 4 weg vorspannen, kommt es dabei zu einer Relativverschlebung des Steges 4'' zu den vom Haltering 6 an Ort und Stelle gehaltenen Spreizfingern 5, von denen mindestens zwei, vorzugsweise jedoch drei oder mehr, um den rotationssymmetrisch ausgebildeten Steg 4' des Zugelementes 4 herum angeordnet sind. Dabei gleiten die unteren Enden der Spreizfinger 5 auf die konische Erweiterung 35 und werden dabei auseinandergedrückt und zwar in eine Nut 39 des hohlen Schaftes 9 eines Werkzeuges oder einer Werkzeughaltetung hinein. In Figur 4 ist ein entsprechender Schaft 9 in der Seitenansicht und einem teilweisen Querschnitt dargestellt. Zum Spannen wird also der Schaft 9 soweit in den Schaftaufnahmeraum 34 eingeschoben, daß die verdickten Enden der Spreizfinger 5 mit der Nut 39 in Eingriff treten können.

Nachdem durch das Aufspreizen der Spreizfinger 5 auf der konischen Fläche 35 die verdickten Enden der Finger 5 in die Nut 39 eingegriffen haben, werden durch eine weitere Bewegung des Zugelementes 4 in Einzugrichtung die Spreizfinger und damit auch der Schaft 9 mitgenommen, so daß sich die polygonalen Seitenflächen des Schaftes 9 und des hohlen Schaftaufnahmeraumes 34 in fester Passung aneinanderlegen. Die Stifte 3 verschieben sich dabei in ihrer Längsrichtung, wobei sie sowohl eine axiale als auch eine radiale Verschiebung erfahren.

Zum Lösen des Schaftes 9 aus der Spannvorrichtung bzw. aus dem Schaftaufnahmeteil 1 wird die Mutter 2 in entgegengesetzte Richtung gedreht, wobei jedoch zunächst wegen des festen Sitzes des Schaftes 9 in der Paßfläche des Schaftaufnahmeraurnes 34 da Zugelement an Ort und Stelle bleibt, da die Kraft der Feder 8, die da Zugelement 4 gegen das Schaftaufnahmeteil 1 in Löserichtung vorspannt, zum Lösen des Schaftes aus seinem festen Sitz nicht ausreicht. Da sich jedoch das Außengewinde 11 im wesentlichen bis zum vorderen Ende des Schaftaufnahmeteils 4 erstreckt, kann die Überwurfmutter 2 bis über den Vorderrand des Schaftaufnahmeteils hinaus geschraubt werden, wobei die Stirnfläche 2c der Mutter 2 mit der Anschlagfläche 9a am unteren Ende des Schaftes 9 in Eingriff tritt, so daß der Schaft 9 über die mit der Steigung des Gewindes 11 übersetzte Kraft aus seinem Preßsitz gelöst werden kann.

Dabei wird auch das Zugelement 4 in Löserichtung mitgenommen und durch die Feder 8 soweit herausgedrückt, bis in etwa wieder die Stellung gemäß Figur 1,2 und 4 erreicht ist. In dieser Position läßt sich die Mutter 2 nicht mehr sehr viel weiter in Löserichtung schrauben, da dann die Fläche 2b an den Seitenflanken der Stifte 3 zur Anlage kommt, die somit die Mutter 2 gegen vollständiges Lösen sichern.

Zur Montage der gesamten Vorrichtung kann man beispielsweise folgendermaßen vorgehen. Zunächst wird der weichelastische Haltering über das erweiterte Vorderende des Zugelementes hinübergeschoben. Die Spreizfinger 5 werden entlang des Umfanges des zylindrischen Sieges 4'' angeordnet und mit einer passenden Haltenut in der Innenfläche des Halteringes 6 in Eingriff gebracht. Die Federn 7 werden in den drei Ausnehmungen 37 angeordnet. Dann wird ein Federring 41 über das erweiterte Ende des Stegteiles 4'' und die Spreizfinger 5 geschoben, der in einer passenden Nut der Spreizfinger 5 aufgenommen ist und diese in fester Anlage an der zylindrischen Außenseite des Sieges 4'' hält.

Die Feder 8 wird in die entsprechenden Aussparungen entweder des Schaftaufnahmeteils 1 oder des Zugelementes 4 eingelegt. In diesem vormontierten Zustand wird da Zugelement 4 mit seinem Flanschteil 4' in der geeigneten Orientierung seines Polygons in den Raum 34 mit dem entsprechenden polygonalen Querschnitt eingeschoben, wobei das Flanschteil 4', wie bereits erwähnt, so bemessen ist, daß es durch die am Übergang des Raumes 34 zur Hinterschneidung 33 gebildete Engstelle hindurchschiebbar ist. Auch der vorzugsweise aus Kunststoff bestehende Haltering 6 kann unter Verformung über diese Engstelle hinweggeschoben werden und dehnt sich anschließend wieder aus, so daß er auf der Stufe bzw. dem Bund 38 aufliegt, welcher zumindest stückweise entlang der Seitenflächen des polygonalen Querschnitts des Raumes 34 ausgebildet ist. Nachdem nun das Flanschteil 4' um 60° gegenüber dem polygonale Querschnitt des Raumes 34 gedreht ist, fluchten die Bohrungen 10 mit den Ausnehmungen 36 am Flanschteil 4', so daß die Stifte 3 in die Bohrungen 10 und die Aussparungen 36 eingeschoben werden können. Das Zugelement 4 ist nun gegen Verdrehung gesichert.

Nun wird die Überwurfmutter 2 auf das Außengewinde am vorderen Ende des Schaftaufnahmeteils 1 aufgeschraubt. Das Schaftaufnahmeteil wird dabei vorzugsweise so gelagert, daß die Stifte 3 zwischenzeitlich nicht aus den Bohrungen 10 herausrutschen können. Falls eine entsprechende Orientierung des Schaftaufnahmeteils nicht möglich ist, kann auch eine zusätzliche provisorische Halterung für die Stifte 3 vorgesehen werden oder aber sie werden mit einer dicken Fettpackung in die Bohrungen 10 eingesetzt, so daß sie nicht herausrutschen können. Beim Aufschrauben der Überwurfmutter 2 tritt dann die hintere Stirnfläche 2a der Mutter 2 bzw. deren Innenkante mit den Stirnflächen der Stifte 3 in Kontakt, wobei die Stifte nach innen gedrückt werden und unter weiterer Anspannung der Feder 8 das Zugelement weiter nach innen drücken. Wahlweise kann jedoch auch das Zugelement 4 mit einem geeigneten Hilfsmittel soweit nach innen gedrückt werden, daß auch die Stifte entsprechend weit axial und radial verschoben sind, so daß die Fläche 2a beim Aufschrauben der Mutter 2 ohne Berührung mit den Stiften 3 an diesen vorbeigleitet. Aufgrund der Vorspannung der Feder 8 wird jedoch anschließend das Zugelement wieder in Löserichtung geschoben, wobei auch die Stifte 3 in ihren Bohrungen 10 nach außen gedrückt werden und den dafür vorgesehenen Platz in der V-förmigen Nut an der Innenseite der Schraubenmutter 2 eingenommen haben.

Der Gewindeteil der Schraube 2 hat einen kleineren Durchmesser als der Abschnitt jenseits der V-förmigen Nut, wobei auch das Schaftaufnahmeteil eine entsprechende Abstufung seines Durchmessers zwischen dem Gewindeteil und dem anschließenden Abschnitt aufweist. Dies erleichtert die Montage und verhindert außerdem ein beliebig weites Aufschrauben der Überwurfmutter 2.

Für die Demontage der gesamten Vorrichtung wird wiederum mit einer Hilfseinrichtung das Zugelement gegen die Feder 8 in das Innere des Raumes 33 gedrückt, wobei das Schaftaufnahmeteil 1 mit seiner geschlossenen Seite nach unten orientiert wird, so daß die Stifte 3 unter der Wirkung der Schwerkraft der Bewegung des Zugelementes folgen und die V-förmige Nut der Überwurfmutter 2 freigeben. Nachdem die Mutter 2 abgeschraubt ist, können die Stifte (durch aufden-Kopf-stellen des Schaftaufnahmeteils 1) aus den Bohrungen 10 entfernt werden, so daß das Zugelement 4 mit seinem Flanschteil 4' in die passende Orientierung relativ zu dem polygonalen Querschnitt des Raumes 34 gedreht werden kann. Anschließend wird das Zugelement 4 aus den Hohlräumen 34 und 33 herausgezogen, wobei sich der elastische Haltering 6 an der Stufe bzw. dem Bund 38 entsprechend verformen muß.

Die beiden in den Figuren 1 und 2 dargestellten Ausführungsformen unterscheiden sich lediglich durch die äußere Gestaltung der Überwurfmutter 2, wobei bei der Ausführungsform gemäß Figur 1 eine Betätigung der Mutter 2 von Hand oder mit Hilfe eines geeigneten Werkzeuges, z.B. eines Hakenschlüssels oder dergleichen, vorgesehen ist. Die Mutter 2 kann ebenso auch parallele Flächen für den Angriff eines Maulschlüssels oder dergleichen aufweisen.

In der Ausführungsform gemäß Figur 2 ist die Außenseite der Mutter speziell für den Eingriff mit einem mechanischen Antriebselement, insbesondere einem Ritzel, ausgestaltet. Eine entsprechende Ergänzung der Spannvorrichtung wird im Zusammenhang mit Figur 4 beschrieben. In Figur 4 erkennt man neben den bereits beschriebenen Elementen der Spannvorrichtung, d.h. dem Schaftaufnahmeteil 1, dem Zugelement 4, den Stiften 3 und der Überwurfmutter 2,sowie den weiteren, daran angeordneten Elementen, auch noch einen Werkzeughalter 14 mit einem Schaft 9. Der Schaft 9 weist neben dem bereits beschriebenen hohlen und sich nach oben verjüngenden Schaftteil mit polygonalem Querschnitt auch einen unteren zylindrischen Erweiterungsabschnitt mit vier entlang des Umfangs und jeweils 90° beabstandeten Einkerbungen 15 auf.

Eine Greifereinrichtung 20 mit Greiferelementen 21 ist vorgesehen, wobei mindestens zwei Greiferelemente 21 von gegenüberliegenden Seiten her in zwei Kerben 15 des zylindrisch erweiterten Schaftteiles eingreifen, um den Werkzeughalter 14 festzuhalten und zwischen einem Magazin und dem Schaftaufnahmeteil 1 zu transportieren. Die Kerben 15 haben eine festeOrientierung bezüglich des polygonalen Querschnittes des oberen Schaftteiles, so daß durch den Eingriff in die Kerben die räumliche Lage des polygonalen Schaftteiles eindeutig definiert ist. Außerdem können an dem Schaft 9 bzw. an dessen zylindrischer Erweiterung zusätzliche Hilfsmittel vorgesehen sein, die eine eindeutige Festlegung der jeweiligen Orientierung ermöglichen.

Oberhalb der Greiferelemente 21 ist ein Ritzel 12 um eine Achse 13 drehbar angeordnet, wobei die Achse 13 parallel zur Achse 17 der Spannvorrichtung und damit auch zur Achse der Schraubenmutter 2 liegt, Die Schraubenmutter 2 weist eine Außenverzahnung 2d auf, die auf die Verzahnung 12d des Ritzels 12 abgestimmt ist. Die Stirnseiten der Verzahnungen 2d, 12d sind angeschrägt bzw. mit einer Fase versehen, welche das axiale Ineinanderschieben der Verzahnungen erleichtert.

Das Einsetzen eines Werkzeuges bzw. Werkzeugschaftes in die Spannvorrichtung läuft mit Hilfe der Greifereinrichtung 20 und dem mechanischen Antriebselement 12 z.B. folgendermaßen ab. Die Greifereinrichtung 20 entnimmt aus einem Magazin einen Werkzeughalter 14, indem mindestens zwei gegenüberliegende Greiferelemente 21 in entsprechende Kerben 15 der zylindrischen Erweiterung des Schaftes 9 eingreifen. Die Orientierung des polygonalen Schaftendes ist damit eindeutig festgelegt. Die Greiferelemente bringen dann den Werkzeughalter 14 mit dem Schaft 9 vor die Öffnung des Schaftaufnahmeteiles 1 und schieben den polygonalen hohlen Schaftteil mit der richtigen polygonalen Orientierung in den Raum 33 ein. Figur 4 kann man sich als eine Momentaufnahme des Einschubvorgangs vorstellen. Wie man in Figur 4 weiterhin erkennt, ist das Ritzel 12 relativ zu den Greiferelementen 21 gerade so gelagert, daß es bei dem axialen Einschieben des Schaftes 9 in den Raum 34 über seine Verzahnung 12d mit der Verzahnung 2d der Überwurfmutter 2 in Eingriff tritt.

Nachdem der Schaft 9 von der Greifereinrichtung 20 lose in das Schaftaufnahmeteil eingeschoben worden ist, so daß die verdickten Enden der Spreizfinger 5 in die Nut 39 im hohen Inneren des polygonalen Schaffendes eingreifen können, wird das Ritzel 12 z.B. durch einen elektrischen oder pneumatischen Motor in der Weise angetrieben, daß die dadurch sich drehende Überwurfmutter sich in Figur 4 nach oben bewegt und dabei über die Stifte 3 das Zugelement 4 nach oben antreibt. In der bereits beschriebenen Weise werden dabei zunächst die Spreizfinger 5 durch Aufgleiten auf die konische Erweiterung 35 des Zugelementes 4 nach außen gespreizt, so daß sie in die Nut 39 fest eingreifen und werden dann vom Zugelement nach oben mitgenommen, wobei die polygonalen Flächen des Schaftes 9 und des Raumes 39 fest aneinander zur Anlage kommen und wobei gleichzeitig auch die Anschlagfläche 9a der zylindrischen Erweiterung des Schaftes 9 an der Stirnfläche 42 des Schaftaufnahmeteiles 1 zur Anlage kommt. Anschließend werden die Greiferelemente 21 vom Schaft 9 gelöst und die Greifereinrichtung kann zusammen mit dem Ritzel 12 in axialer und/oder radialer Richtung von der Spannvorrichtung wegfahren. Beim Lösevorgang erfolgen diesen Schritte in umgekehrter Reihenfolge, d.h. die Greifereinrichtung wird auf den Schaft 9 in axialer und/oder radialer Richtung zugefahren, wobei die Verzahnung 12d des Ritzes 12 mit der Verzahnung 2d der Überwurfmutter 2 in Eingriff tritt. Die Greiferelemente 21 erfassen den Schaft 9 in den Kerben 15 und das Ritzel 12 dreht die Mutter 2 In Löserichtung. Dabei kommt die Stirnfläche 40 der Mutter 2 in Eingriff mit der in radialer Richtung etwas überstehenden Anlagefläche 9a der zylindrischen Erweiterung des Schaftes 9, so daß der Schaft 9 durch die von der Mutter 2 auf die Fläche 9a ausgeübte Kraft aus seinem festen Sitz in dem Raum 34 herausgezogen wird. Dabei geben die Spannfinger die Nut 39 wieder frei und die Greifereinrichtung kann zusammen mit dem Schaft 9 und dem Ritzel 12 in axialer Richtung von der Spannvorrichtung wegbewegt werden, den Werkzeughalter bzw. das Werkzeug 14 ablegen, ein neues ergreifen und wieder in die Spannvorrichtung einführen.

Die erfindungsgemäße Spannvorrichtung ist in Figur 4 in der linken Hälfte schematisch als an einem stehenden Maschinenteil montiert dargestellt, während in der rechten Bildhälfte das Schaftaufnahmeteil als Teil einer Welle bzw. als an einer Welle montiert dargestellt ist, welche in einem Lager 16 rotiert. Bei einer solchen rotierenden Ausführungsform sollten an dem Schaftaufnahmeteil Markierungen oder sonstige Kennungen angebracht sein, die die Orientierungslage der Welle bzw. des Schaftaufnahmeteils 1 eindeutig angeben. Bei festen, ganzzahligen Getriebeübersetzungen kann die Drehposition auch durch elektronische Drehzähler festgelegt werden. Ein Vorteil der mit der automatischen Greifereinrichtung ergänzten Spannvorrichtung liegt dann vor allem auch darin, daß mit Hilfe des Ritzels 12 das Schaftaufnahmeteil 1 vor dem Einführen des Schaftes 9 oder vor dem Lösen desselben aus der Vorrichtung zunächst durch Drehen des Ritzels und der Überwurfmutter, die ihrerseits auch - gegebenenfalls nach einer gewissen Anzahl von Leerdrehungen - das Schaftaufnahmeteil 1 mitnimmt, bis über einen entsprechenden Sensor- oder Abfühlmechanismus die korrekte Orientierung des Schaftaufnahmeteils 1 festgestellt worden ist.

Beim Spannen und beim Lösen wird die zum Los- oder Festdrehen der Überwurfmutter erforderliche Gegenkraft über den Schaft 9 von den Greiferelementen 21 aufgenommen, so daß es nicht erforderlich ist, spezielle Einrichtungen zum Fixieren eines drehbar gelagerten Schaftaufnahmeteils 1 zu treffen.

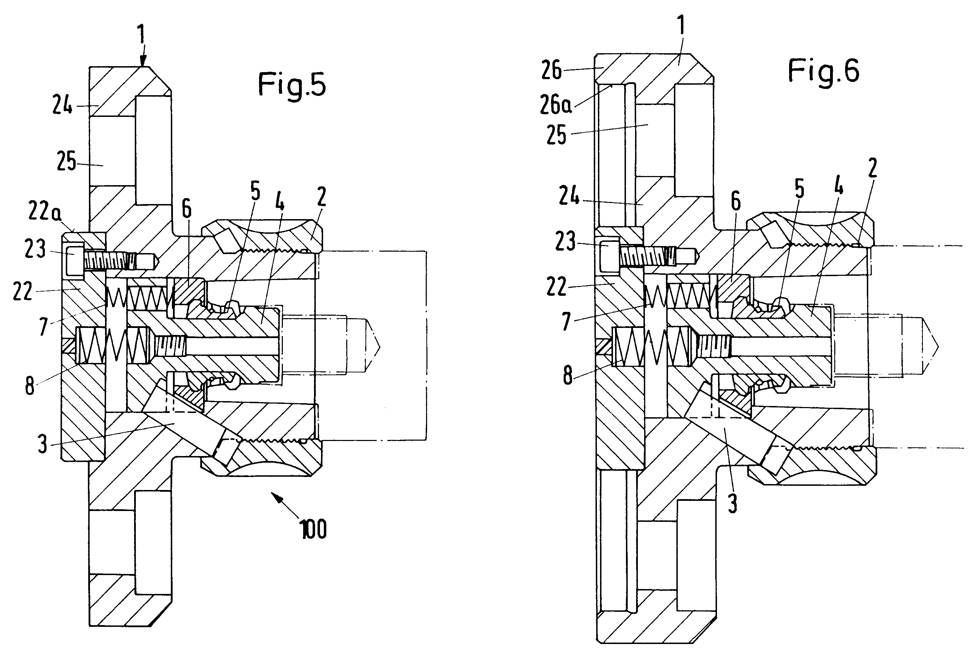

Fig. 5 entspricht im wesentlichen der Fig. 1, wobei jedoch ein innerer, sich von dem Schaftaufnahmeteil auf der werkzeugabgewandten Seite weg erstreckender Zentrierzapfen 22 ein getrenntes Teil ist, welches mit Hilfe von Schrauben 23 an dem Schaftaufnahmeteil 1 befestigt ist.

Das Zentrierteil 22 weist eine zylindrische Zentrierfläche 22a auf, die gegebenenfalls auch leicht konisch sein kann. Zwecks besserer Einführung des Zentrierzapfens oder Zentrierteiles 22 ist der Übergang von der ebenen äußeren Oberfläche 22b zur umlaufenden zylindrischen Zentrierfläche 22a angefast. Das Schaftaufnahmeteil 1 weist einen das Zentrierteil 22 umgebenden Flansch 24 auf, der z. B. an einen Spindelkopf mit Steilkegel gemäß DIN 2079 anflanschbar ist, wobei das Zentrierteil 22 in die Steilkegelaufnahme hineingleitet und die mechanische Spannvorrichtung, die als Ganzes mit 100 bezeichnet ist, zentriert.

Dabei liegt der Flansch 24 an dem entsprechenden Flanschteil des Spindelkopfes, weicher die Steilkegelaufnahme umgibt, fest an. Der Flansch 24 wird durch nichtdargestellte Schrauben, welche in den Durchgangsbohrungen 25 aufgenommen sind und in entsprechende Gewindebohrungen am Flanschteil des Spindelkopfes eingreifen, an letzteren angeflanscht.

Es versteht sich, daß die Werkzeugmaschine nicht unbedingt einen Spindelkopf mit Steilkegel aufweisen muß, um die erfindungsgemäße Spannvorrichtung in einer wohldefinierten Position daran zu befestigen, sondern es vielmehr ausreicht, wenn der entsprechende Werkzeugkopf der Werkzeugmaschine einen Flansch bzw. eine ebene Anlagefläche mit einer zentralen Zentrierbohrung zur Aufnahme des Zentrierstückes 22 aufweist, wobei in der ebenen Fläche außerdem die entsprechenden Gewindebohrungen für Schrauben vorhanden sein müssen, welche die Befestigungsbohrungen 25 des Flansches 24 durchgreifen.

Fig. 6 zeigt eine mechanische Spannvorrichtung 101, die sich von der Spannvorrichtung 100 nur dadurch unterscheidet, daß der Flansch 24 mit einem umlaufenden Bund 26 versehen ist, dessen zylindrische Innenfläche 26a einen entsprechenden zylindrischen Schaft oder Stutzen eines Werkzeugkopfes einer Werkzeugmaschine umgreift. Auch hier ist die freie Kante der zylindrischen Zentrierfläche 26a angefast, um ein Aufstecken auf den Stutzen oder dergleichen zu erleichtern. Das innere Element 22 greift dabei ebenfalls in eine Bohrung des Stutzens am Werkzeugkopf der Werkzeugmaschine ein, dient jedoch nicht zum Zentrieren, da diese Funktion von der Fläche 26a übernommen wird. Befestigt wird auch diese mechanische Spannvorrichtung 101 mit Hilfe von nicht dargestellten Befestigungsschrauben, weiche die Befestigungsbohrungen 25 durchgreifen und in entsprechende Gewindebohrungen am Werkzeugkopf der Werkzeugmaschine eingeschraubt werden.

Es versteht sich, daß auch andere Verbindungsarten als das Anschrauben mit Hilfe von Befestigungsschrauben durch die Befestigungsbohrungen 25 ohne weiteres eingesetzt werden können.

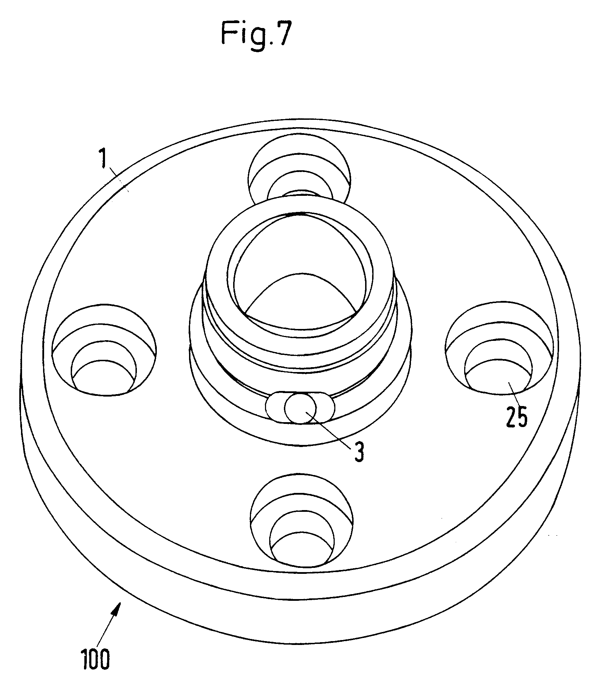

Fig. 7 zeigt den Werkzeughalter 100 bzw. 101 in einer perspektivischen Ansicht ohne die Überwurfmutter 2. Man erkennt die vier Befestigungsbohrungen 25 für den Flansch 24 sowie in der Draufsicht einen Stift oder Druckbolzen 3 in einer entsprechenden Öffnung, sowie den Zentralhohlraum 34 mit dem speziell geformten Querschnitt für die Aufnahme eines Werkzeugschaftes.

Die Patentanmeldung EP-A-528 263 enthält Ansprüche, die auf andere Aspekte des selben Gegenstaudes gerichtet sind.

## Patentansprüche

1. Mechanische Spannvorrichtung für den Schaft (9) eines Werkzeuges oder Werkzeughalters, mit einem hohlen Schaftaufnahmeteil (1), in weichem ein Zugelement (4) angeordnet ist, wobei ein oder mehrere Stifte (3), die in ihrer Längsrichtung bewegbar sind, an dem Zugelement (4) angreifen, Bohrungen (10) für die Stifte (3) in dem Schaftaufnahmeteil (1) vorgesehen sind, welche sich von dem hohlen Inneren desselben nach außen erstrecken, und die Angriffsfläche (4a) an dem Zugelement (4) und/oder an den Stiften (3) oder deren Bewegungsrichtung so ausgelegt sind, daß die Stifte (3) bei ihrer Bewegung zum Spannen eine Kraft in axialer Richtung auf den Schaft (9) ausüben, dadurch gekennzeichnet, daß das Schaftaufnahmeteil (1) als Hohlteil derart ausgebildet ist, daß ein durch das Zugelement einzuziehender, passender Schaft (9) darin aufnehmbar ist, daß das Schaftaufnahmeteil (1) mit einem Außengewinde (11) versehen ist und eine passende Überwurfmutter (2) aufweist und daß die Überwurfmutter (2) eine umlaufende Stützfläche (2a) für die Stifte (3) aufweist, welche so ausgerichtet ist, daß sie beim Anziehen der Überwurfmutter (2) in Spannrichtung die Stifte (3) durch die Bohrungen (10) in das Innere des Schaftaufnahmeteils (1) und gegen die Angriffsfläche am Zugelement (4) drückt.

2. Spannvorrichtung nach Anspruch 1, dadurch gekennzeichnet, daß die Bohrungen (10) in einer Ebene liegen, welche die Achse (17) der Spannvorrichtung enthält und daß die Bohrungen (10) unter einem Winkel von weniger als 45° zur Achse (17) der Spannvorrichtung geneigt sind.

3. Spannvorrichtung nach Anspruch 2, dadurch gekennzeichnet, daß der Neigungswinkel in etwa 30° beträgt.

4. Spannvorrichtung nach einem der Ansprüche 1 bis 3, dadurch gekennzeichnet, daß das Außengewinde (11) sich mindestens bis auf einen Abstand zum vorderen Ende des Schaftaufnahmeteils (1) erstreckt, der kleiner ist als die axiale Gewindelänge der Überwurfmutter (2) und vorzugsweise Null ist.

5. Spannvorrichtung nach einem der Ansprüche 1 bis 4, dadurch gekennzeichnet, daß die Stützfläche (2a) der Überwurfmutter (2) eine konische Fläche ist, deren Winkel gegenüber einer zur Achse (17) senkrechten Ebene der gleiche ist wie der Winkel (α) der Bohrungen (10) bzw. Stifte (3) zur Achse (17) der Spannvorrichtung.

6. Spannvorrichtung nach Anspruch 5, dadurch gekennzeichnet, daß die Stutzfläche (2a) von einer Seitenwand einer in der Innenfläche der Überwurfmutter umlaufenden V-förmigen Nut gebildet wird, wobei der Winkel zwischen den beiden V-Flächen der Nut in etwa 90° beträgt.

7. Spannvorrichtung nach einem der Ansprüche 1 bis 6, dadurch gekennzeichnet, daß das Zugelement (4) ein im Längsschnitt T-förmiges Teil ist, dessen Steg (4'') von einem im wesentlichen zylindrischen Teil gebildet wird, an welchem Spreizfinger (5) anliegen, und dessen Flanschteil (4') in Richtung der Stifte (3) offene Aussparungen (18) aufweist, deren Grund die Angriffsfläche (4a) für die Stifte (3) bildet.

8. Spannvorrichtung nach Anspruch 7, dadurch gekennzeichnet, daß zwischen den Aussparungen (18) zur Aufnahme der Stifte (3) zusätzliche zweite Aussparungen (19) vorgesehen sind, die eine Feder (7) aufnehmen, welche sich mit einem Ende am Grund der zweiten Aussparungen (19) und mit dem anderen Ende an einem die Spreizfinger (5) haltenden Haltering (6) abstützt, welcher seinerseits auf einem mindestens teilweise nach innen ragenden Bund an der Innenwand des Schaftaufnahmeteils (1) aufliegt.

9. Spannvorrichtung nach einem der Ansprüche 1 bis 8, dadurch gekennzeichnet, daß eine weitere Feder (8) zwischen dem Schaftaufnahmeteil (1) und dem Zugelement (4) angeordnet ist, welche das Zugelement (4) in Löserichtung vorspannt.

10. Spannvorrichtung nach einem der Ansprüche 1 bis 9, dadurch gekennzeichnet, daß der Außendurchmesser des vorderen Endes der Schaftaufnahme kleiner ist als der Durchmesser einer Flanschfläche (9a) am Schaft (9) des Werkzeuges bzw. Werkzeughalters.

11. Spannvorrichtung nach einem der Ansprüche 1 bis 10, dadurch gekennzeichnet, daß die Schaftaufnahme an einem rotierenden Maschinenteil angeordnet ist.

12. Spannvorrichtung nach einem der Ansprüche 1 bis 11, dadurch gekennzeichnet, daß der Hohlraum des Schaftaufnahmeteils einen polygonalen Querschnitt hat und sich zum Inneren des Schaftaufnahmeteils hin verjüngt.

13. Spannvorrichtung nach Anspruch 12, dadurch gekennzeichnet, daß die Ecken des polygonalen Querschnittes abgerundet und die dazwischenliegenden Seiten leicht konvex gekrümmt sind.

14. Spannvorrichtung nach Anspruch 12 oder 13, dadurch gekennzeichnet, daß die polygonale Grundform ein gleichseitiges Dreieck ist.

15. Spannvorrichtung nach einem der Ansprüche 12 bis 14, dadurch gekennzeichnet, daß das Flanschteil (4') des Zugelementes (4) den gleichen polygonalen Querschnitt hat wie der sich konisch nach innen verjüngende Schaftaufnahmeraum (34) und daß die Außenmaße des Flanschteiles (4') in etwa den minimalen Innenmaßen des Schaftaufnahmeraumes (34) entsprechen, wobei an den sich konisch verjüngende Schaftaufnahmeraum (34) eine zylindrische Hinterschneidung (33) anschließt, deren Radius dem maximalen Radius des polygonalen Querschnitts entspricht, so daß das Flanschteil (4') in den hinterschnittenen Bereich (33) einführbar ist.

16. Spannvorrichtung nach Anspruch 15, dadurch gekennzeichnet, daß das Flanschteil (4') nach dem Einführen in den hinterschnittenen Bereich (33) gegenüber dem Schaltaufnahmeraum (34) um den halben Polygonwinkel verdreht wird, wobei die Bohrungen (10) in dieser Stellung mit den Aussparungen (18) für die Stifte (3) in dem Flanschteil (4') fluchten.

17. Spannvorrichtung nach Anspruch 15 oder 16, dadurch gekennzeichnet, daß der Haltering (6) aus einem welchelastischen Material besteht und an seiner Außenseite in etwa denselben Durchmesser hat, wie der hinterschnittene, zylindrische Raum (33) des Schaftaufnahmeteils (1).

18. Spannvorrichtung nach einem der Ansprüche 1 bis 17, dadurch gekennzeichnet, daß die Überwurfmutter (2) an ihrer Außenseite für den Eingriff mit einem mechanischen Antriebselement (12) ausgelegt ist.

19. Spannvorrichtung nach Anspruch 18, dadurch gekennzeichnet, daß die Überwurfmutter (2) eine Außenverzahnung (2b) aufweist.

20. Spannvorrichtung nach Anspruch 18 oder 19, dadurch gekennzeichnet, daß das mechanische Antriebselement ein Ritzel (12) ist, welches relativ zur Überwurfmutter (2) in Axialrichtung und/oder in radialer Richtung verschiebbar und dadurch in und außer Eingriff mit der Überwurfmutter (2) bringbar ist.

21. Spannvorrichtung nach einem der Ansprüche 18 bis 20, dadurch gekennzeichnet, daß das mechanische Antriebselement an einem Schaftgreifer (20) angeordnet ist.

22. Spannvorrichtung nach einem der Ansprüche 18 bis 21, dadurch gekennzeichnet, daß das mechanische Antriebselement relativ zum Schaftgreifer (20) so angeordnet und drehbar gelagert ist, daß der gleichzeitige Eingriff des mechanischen Antriebselementes (12) an der Überwurfmutter (2) und der Greilerelemente (21) an den dafür vorgesehenen Schaftbereichen (15) möglich ist.

23. Spannvorrichtung nach einem der Ansprüche 1 bis 22, dadurch gekennzeichnet, daß auf der dem Werkzeug abgewandten Seite der Spannvorrichtung (100) ein Befestigungselement (22,24,25,26) für die Verbindung mit einer Standardschnittstelle einer Werkzeugmaschine vorgesehen ist.

24. Mechanische Spannvorrichtung nach Anspruch 23, **dadurch gekennzeichnet**, daß das Verbindungselement einen Flansch (24) aufweist.

25. Mechanische Spannvorrichtung nach Anspruch 24, **dadurch gekennzeichnet**, daß das Verbindungselement ein Zentrierelement (22,26) aufweist.

26. Spannvorrichtung nach Anspruch 25, **dadurch gekennzeichnet**, daß das Zentrierelement ein zentraler Zentrierzapfen (22) ist.

27. Spannvorrichtung nach Anspruch 25, **dadurch gekennzeichnet,** daß das Zentrierelement ein unlaufender Bund (26) ist, welcher eine innere, zylindrische Zentrierfläche (26a) aufweist.

28. Spannvorrichtung nach einem der Ansprüche 24 bis 27, **dadurch gekennzeichnet**, daß das Verbindungselement für die Verbindung mit einem Spindelkopf gemäß DIN 2079 ausgestaltet ist.

29. Spannvorrichtung nach einem der Ansprüche 23 bis 27, **dadurch gekennzeichnet**, daß das Verbindungselement passend für eine VDMA-Schnittstelle ausgerüstet ist.

30. Spannvorrichtung nach einem der Ansprüche 23 bis 27, **dadurch gekennzeichnet**, daß das Verbindungselement für eine Zylinderschaft-Werkzeughalteraufnahme gemäß VDI 3425 ausgerüstet ist.

## Claims

1. Mechanical clamping device for the shaft (9) of a tool or tool holder, having a hollow shaft receiving member (1) in which a traction element (4) is arranged, and wherein one or more pins (3) that are movable in the direction of their length engage the traction element (4), bores (10) for the pins (3) being provided in the shaft receiving member (1) which extend from its hollow interior to the exterior, and the engagement surface (4a) on the traction element (4) and/or on the pins (3) or their direction of movement being so arranged that the pins (3) in their movement for clamping exert a force in the axial direction on the shaft (9), characterised in that the shaft receiving member (1) is formed as a hollow part so that a shaft (9) which is to be pulled in by the traction element and fits can be received in it, the shaft receiving member (1) is provided with an external thread (11) and has a sleeve nut (2) that fits, and that the sleeve nut (2) has a circumferentially extending support surface (2a) for the pins (3) which is so arranged that on tightening of the sleeve nut (2) in the clamping direction it presses the pins (3) along the bores (10) into the interior of the shaft receiving member (1) and against the engagement surface on the traction element (4).

2. Clamping device according to claim 1, characterised in that the bores (10) lie in a plane which contains the axis (17) of the clamping device and that the bores (10) are inclined at an angle of less than 45° to the axis (17) of the clamping device.

3. Clamping device according to claim 2, characterised in that the angle of inclination is about 30°.

4. Clamping device according to one of claims 1 to 3, characterised in that the external thread (11) extends at least to a shortfall from the front end of the shaft receiving member (1), the shortfall being less than the axial thread length of the sleeve nut (2) and being preferably nil.

5. Clamping device according to one of claims 1 to 4, characterised in that the support surface (2a) of the sleeve nut (2) is a conical surface whose angle with respect to a plane perpendicular to the axis (17) is the same as the angle (α) of the bores (10) and of the pins (3) to the axis (17) of the clamping device.

6. Clamping device according to claim 5, characterised in that the support surface (2a) is formed by a side wall of a V-shaped groove which extends circumferentially along the inner surface of the sleeve nut, the angle between the two surfaces of the V of the groove being about 90°.

7. Clamping device according to one of claims 1 to 6, characterised in that the traction element (4) in longitudinal section is a T-shaped part whose shank (4'') is formed by a substantially cylindrical part, adjoined by expansion fingers (5), and whose flange part (4') has recesses (18) which are open in the direction of the pins (3) and of which the base forms the engagement surface (4a) for the pins (3).

8. Clamping device according to claim 7, characterised in that between the recesses (18) which receive the pins (3), additional second recesses (19) are provided which receive a spring (7) supported at one end against the base of the second recesses (19) and at the other end against a retaining ring (6) which retains the expansion fingers (5) and in turn abuts against a collar of the inner wall of the shaft receiving member (1) that at least in part extends inwardly.

9. Clamping device according to one of claims 1 to 8, characterised in that a further spring (8) is arranged between the shaft receiving member (1) and the traction element (4) which pre-loads the traction element (4) in the releasing direction.

10. Clamping device according to one of claims 1 to 9, characterised in that the outer diameter of the front end of the shaft reception is less than the diameter of a flange surface (9a) on the shaft (9) of the tool or tool holder.

11. Clamping device according to one of claims 1 to 10, characterised in that the shaft reception is arranged on a rotating machine part.

12. Clamping device according to one of claims 1 to 11, characterized in that the hollow chamber of the shaft receiving member has a polygonal cross section and is of reducing taper towards the interior of the shaft receiving member.

13. Clamping device according to claim 12, characterized in that the corners of the polygonal cross section are rounded and the sides in between are slightly convexly curved.

14. Clamping device according to claim 12 or 13, characterized in that the polygonal base outline is an equilateral triangle.

15. Clamping device according to one of claims 12 to 14, characterized in that the flange part (4') of the traction element (4) is of the same polygonal cross section as the conical inwardly reducing tapered shaft receiving chamber (34) and that the external dimensions of the flange part (4') correspond to about the smallest inner dimensions of the shaft receiving chamber (34), the conical reducing tapered shaft receiving chamber (34) being contiguous with a cylindrical undercut (33) whose radius corresponds to the largest radius of the polygonal cross section so that the flange part (4') can be introduced into the undercut region (33).

16. Clamping device according to claim 15, characterized in that the flange part (4') after introduction into the undercut region (33) is twisted with respect to the shaft receiving chamber (34) by half the polygon angle, the bores (10) in this position being in alignment with the recesses (18) in the flange part (4') for the pins (3).

17. Clamping device according to claim 15 or 16, characterized in that the retaining ring (6) consists of a soft elastic substance and its exterior is of about the same diameter as the cylindrical undercut chamber (33) of the shaft receiving member (1).

18. Clamping device according to one of claims 1 to 17, characterized in that the exterior of the sleeve nut (2) is designed for engagement with a mechanical drive element (12).

19. Clamping device according to claim 18, characterized in that the sleeve nut (2) has external toothed gearing (2b).

20. Clamping device according to claim 18 or 19, characterized in that the mechanical drive element is a pinion (12) which is displaceable in axial direction and/or radial direction relatively to the sleeve nut (2) to bring it into and out of engagement with the sleeve nut (2).

21. Clamping device according to one of claims 18 to 20, characterized in that the mechanical drive element is arranged on a shaft gripper (20).

22. Clamping device according to one of claims 18 to 21, characterized in that the mechanical drive element is so arranged and rotatably mounted relative to the shaft gripper (20), as to enable simultaneous engagement of the mechanical drive element (12) with the sleeve nut (2), and of the gripper element (21) with its intended shaft region (15).

23. Clamping device according to one of claims 1 to 22, characterized in that a securing element (22,24,25,26) is provided on the side of the clamping device (100) facing away from the tool for connection with a standard interface of a machine tool.

24. Mechanical clamping device according to claim 23, characterized in that the connecting element has a flange (24).

25. Mechanical clamping device according to claim 24, characterized in that the connecting element has a centring element (22,26).

26. Clamping device according to claim 25, characterized in that the centring element is a central centring spigot (22).

27. Clamping device according to claim 25, characterized in that the centring element is a circumferentially extending collar which has an inner cylindrical centring surface (26a).

28. Clamping device according to one of claims 24 to 27, characterized in that the connecting element for connection with a spindle head is formed according to DIN 2079.

29. Clamping device according to one of claims 23 to 27, characterized in that the connecting element is adapted to fit a VDMA interface.

30. Clamping device according to one of claims 23 to 27, characterized in that the connecting element is adapted for a cylindrical shaft tool holder reception according to VDI 3425.

## Revendications

1. Dispositif de serrage mécanique pour la tige (9) d'un outil ou d'un porte-outil, comportant une partie évidée (1) de logement de la tige, dans laquelle est disposé un élément de traction (4), et dans lequel il est prévu une ou plusieurs broches (3), qui sont déplaçables dans leur direction longitudinale et attaquent l'élément de traction (4), et des perçages (10) pour les broches (3), ménagés dans la partie (1) de logement de la tige, les broches s'étendant vers l'extérieur à partir de l'intérieur évidé de cette partie de logement de la tige, et les surfaces d'attaque (4a) situées sur l'élément de traction (4) et/ou sur les broches (3) ou leur direction de déplacement sont choisies de telle sorte que, lors de leur déplacement pour le serrage, les broches (3) appliquent à la tige (9) une force dans une direction axiale, caractérisé en ce que la partie (1) de logement de la tige est réalisée sous la forme d'une partie creuse, qu'une tige adaptée (9), destinée à être rétractée par l'élément de traction, peut être logée dans cette partie de logement, que la partie (1) de logement de la tige est pourvue d'un filetage extérieur (11) et comporte un écrou-raccord adapté (2), et que l'écrou-raccord (2) possède une surface d'appui circonférentielle (2a) pour les broches (3), qui est orientée de telle sorte que, lors du serrage de l'écrou-raccord (2) dans le sens du serrage, cette surface d'appui repousse les broches (3) à travers les perçages (10) à l'intérieur de la partie (1) de logement de la tige et contre la surface d'attaque située sur l'élément de traction (4).

2. Dispositif de serrage selon la revendication 1, caractérisé en ce que les perçages (10) sont situés dans un plan, qui contient l'axe (17) du dispositif de serrage, et que les perçages (10) sont inclinés sous un angle inférieur à 45° par rapport à l'axe (17) du dispositif de serrage.

3. Dispositif de serrage selon la revendication 2, caractérisé par le fait que l'angle d'inclinaison est égal à environ 30°.

4. Dispositif de serrage selon l'une des revendications 1 à 3, caractérisé en ce que le filetage extérieur (11) s'étend au moins jusqu'à une distance de l'extrémité avant de la partie (1) de logement de la tige, qui est inférieure à la longueur axiale du filetage de l'écrou-raccord (2) et est de préférence nulle.

5. Dispositif de serrage selon l'une des revendications 1 à 4, caractérisé en ce que la surface d'appui (2a) de l'écrou-raccord (2) est une surface conique, dont l'angle par rapport à un plan perpendiculaire à l'axe (17), est égal à l'angle (α) des perçages (10) ou des tiges (3) par rapport à l'axe (17) du dispositif de serrage.

6. Dispositif de serrage selon la revendication 5, caractérisé en ce que la surface d'appui (2a) est formée par une paroi latérale d'une gorge en V, qui s'étend circonférentiellement dans la surface intérieure de l'écrou-raccord, l'angle entre les deux surfaces en V de la gorge étant égal approximativement à 90°.

7. Dispositif de serrage selon l'une des revendications 1 à 6, caractérisé en ce que l'élément de traction (4) est une partie en forme de T en coupe longitudinale, dont le pied (4'') est formé par une partie essentiellement cylindrique, contre laquelle s'appliquent des doigts d'écartement (5), et dont la partie formant bride (4') possède des évidements (18), qui s'ouvrent en direction des broches (3) et dont le fond forme les surfaces d'attaque (4a) pour les broches (3).

8. Dispositif de serrage selon la revendication 7, caractérisé en ce qu'entre les évidements (18) servant à loger les broches (3) sont prévus des seconds évidements supplémentaires (19), qui logent un ressort (7), qui prend appui par une extrémité contre le fond des seconds évidements (19) et, par son autre extrémité, contre une bague de retenue (6) qui retient les doigts d'écartement (5) et qui s'applique, pour sa part, sur un collet qui fait saillie au moins partiellement vers l'intérieur et est présent sur la paroi intérieure de la partie (1) de logement de la tige.

9. Dispositif de serrage selon l'une des revendications 1 à 8, caractérisé en ce qu'un autre ressort (8) est disposé entre la partie (1) de logement de la tige et l'élément de traction (4), ce ressort appliquant à l'élément de traction (4) une précontrainte dans la direction de desserrage.

10. Dispositif de serrage selon l'une des revendications 1 à 9, caractérisé en ce que le diamètre extérieur de l'extrémité avant du logement de la tige est inférieur au diamètre de la surface (9a) de bride sur la tige (9) de l'outil ou du porte-outil.

11. Dispositif de serrage selon l'une des revendications 1 à 10, caractérisé en ce que le logement pour la tige est disposé sur une pièce tournante de machine.

12. Dispositif de serrage selon l'une des revendications 1 à 11, caractérisé en ce que la chambre évidée de la partie de logement de la tige possède une section transversale polygonale et se rétrécit en direction de l'intérieur de la partie de logement de la tige.

13. Dispositif de serrage selon la revendication 12, caractérisé en ce que les angles de la section transversale polygonale sont arrondis et que les côtés intercalaires sont légèrement cintrés avec une forme convexe.

14. Dispositif de serrage selon la revendication 12 ou 13, caractérisé en ce que la forme de base polygonale est un triangle équilatéral.

15. Dispositif de serrage selon l'une des revendications 12 à 14, caractérisé en ce que la partie formant bride (4') de l'élément de traction (4) possède la même section transversale polygonale que la chambre (34) de logement de la tige, qui se rétrécit vers l'intérieur avec une forme conique, et que les cotes extérieures de la partie formant bride (4') correspondent approximativement aux cotes intérieures minimales de la chambre (34) de logement de la tige, et qu'à la chambre de forme conique rétréci (34) de logement de la tige se raccorde une partie cylindrique en contre-dépouille (33), dont le rayon correspond au rayon maximum de la section transversale polygonale, de sorte que la partie formant bride (4') peut être insérée dans la partie en contre-dépouille (33).

16. Dispositif de serrage selon la revendication 15, caractérisé en ce qu'après l'insertion de la partie formant bride (4') dans la zone en contre-dépouille (33), on la fait tourner sur la moitié de l'angle du polygone par rapport à la chambre (34) du logement de la tige, les perçages (10) étant, dans cette position, alignés avec les évidements (18) ménagés pour les broches (3) dans la partie formant bride (4').

17. Dispositif de serrage selon la revendication 15 ou 16, caractérisé en ce que la bague de retenue (6) est réalisée en un matériau élastique mou et possède, au niveau de sa face extérieure, approximativement le même diamètre que la chambre cylindrique en contre-dépouille (33) de la partie (1) de logement de la tige.

18. Dispositif de serrage selon l'une des revendications 1 à 17, caractérisé en ce que l'écrou-raccord (2) est conçu, au niveau de sa face extérieure, pour l'accrochage d'un élément d'entraînement mécanique (12).

19. Dispositif de serrage selon la revendication 18, caractérisé en ce que l'écrou-raccord (2) possède une denture extérieure (2b).

20. Dispositif de serrage selon la revendication 18 ou 19, caractérisé en ce que l'élément d'entraînement mécanique est un pignon (12), qui peut se déplacer par rapport à l'écrou-raccord (2) dans une direction axiale et/ou dans une direction radiale et peut être amené de ce fait à engrener avec l'écrou-raccord (2) et peut être dégagé de ce dernier.

21. Dispositif de serrage selon l'une des revendications 18 à 20, caractérisé en ce que l'élément d'entraînement mécanique est monté sur un dispositif (20) de saisie de la tige.

22. Dispositif de serrage selon l'une des revendications 18 à 21, caractérisé en ce que l'élément d'entraînement mécanique est disposé et est monté de façon à pouvoir tourner par rapport au dispositif (20) de saisie de la tige, de telle sorte que l'engrènement simultané entre l'élément d'entraînement mécanique (12) situé sur l'écrou-raccord (2) et les éléments de saisie (21) situés sur les parties (15) de la tige, prévues à cet effet, est possible.

23. Dispositif de serrage selon l'une des revendications 1 à 22, caractérisé en ce que sur le côté du dispositif de serrage (100), tourné à l'opposé de l'outil est prévu un élément de fixation (22,24,25,26) servant à établir la liaison avec une interface standard d'une machine-outil.

24. Dispositif de serrage selon la revendication 23, caractérisé en ce que l'élément de liaison possède une bride (24).

25. Dispositif de serrage selon la revendication 24, caractérisé en ce que l'élément de liaison possède un élément de centrage (22,26).

26. Dispositif de serrage selon la revendication 25, caractérisé en ce que l'élément de centrage est un embout central de centrage (22).

27. Dispositif de serrage selon la revendication 25, caractérisé en ce que l'élément de centrage est un collet circonférentiel (26), qui possède une surface intérieure cylindrique de centrage (26a).

28. Dispositif de serrage selon l'une des revendications 24 à 27, caractérisé en ce que l'élément de liaison pour l'établissement de liaison avec une tête de broche est agencé conformément à DIN 2079.

29. Dispositif de serrage selon l'une des revendications 23 à 27, caractérisé en ce que l'élément de liaison est équipé d'une manière adaptée pour une interface VDMA.

30. Dispositif de serrage selon l'une des revendications 23 à 27, caractérisé en ce que l'élément de liaison pour un logement de porte-outil à tige cylindrique est équipé conformément à VDI 3425.
